# EUROPEAN PATENT APPLICATION

(11) **EP 4 832 192 A1**
(43) Date of publication of application: **28.10.2026**
(21) Application number: 26157261.4
(22) Date of filing: 09.02.2026
(51) Int. Cl.: H01M 50/211, H01M 50/244, H01M 50/262, H01M 50/271, H01M 50/296, H01M 50/516, H01M 50/517, H01M 50/548, H01M 50/557

(54) **BATTERY MODULE**

(30) Priority: 25.04.2025 JP 2025073479
(71) Applicant: Toyota Jidosha Kabushiki Kaisha, Toyota-shi, Aichi-ken 471-8571 (JP)
(72) Inventor: YAMASHITA, Osamu, TOYOTA-SHI, AICHI-KEN, 471-8571 (JP); ARAKAWA, Takuya, TOYOTA-SHI, AICHI-KEN, 471-8571 (JP); IWATA, Makoto, TOYOTA-SHI, AICHI-KEN, 471-8571 (JP); KIMURA, Kenta, TOYOTA-SHI, AICHI-KEN, 471-8571 (JP); KIMURA, Ryo, TOYOTA-SHI, AICHI-KEN, 471-8571 (JP); TSUNEKAWA, Kunihiro, TOYOTA-SHI, AICHI-KEN, 471-8571 (JP); YANASE, Koichi, TOYOTA-SHI, AICHI-KEN, 471-8571 (JP)
(74) Representative: Cabinet Beau de Loménie

(57) **Abstract**

The battery module may include: a plurality of battery cells stacked in a first direction and each including an electrode tab extending in a second direction perpendicular to the first direction; and a guide member located on one side of the battery cells in the second direction and having a plurality of slits through which the electrode tabs of the battery cells respectively pass. In each of the battery cells, the electrode tab that has passed through the slit may be joined to the electrode tab of at least one other battery cell.

## Description

### BACKGROUND OF THE INVENTION

### 1. Field of the Invention

The technology disclosed in the present specification relates to battery modules.

### 2. Description of Related Art

Japanese Unexamined Patent Application Publication No. 2011-249243 (JP 2011-249243 A) describes a battery module mounted in an electrified vehicle. This battery module includes a plurality of battery cells stacked on each other, and a busbar that electrically connects the battery cells. Each of the battery cells has electrode tabs, and the electrode tabs of the battery cells are joined to the busbar.

### SUMMARY OF THE INVENTION

In the above battery module, a busbar is provided to connect the electrode tabs to each other. The bus bar is a rigid metal component and has a relatively large weight. Accordingly, a possible approach to reduce the weight of the battery module is to omit the busbar and directly join two or more electrode tabs. However, the busbar also serves to hold the electrode tabs that are relatively fragile. Therefore, if the busbar is omitted without careful consideration, the electrode tabs may undergo unintended deformation or damage. The present specification provides a novel technique for reducing the use of busbars in a battery module.

The technology disclosed in the present specification is embodied in a battery module. The battery module may include: a plurality of battery cells stacked in a first direction and each including an electrode tab extending in a second direction perpendicular to the first direction; and a guide member located on one side of the battery cells in the second direction and having a plurality of slits through which the electrode tabs of the battery cells respectively pass. In each of the battery cells, the electrode tab that has passed through the slit may be joined to the electrode tab of at least one other battery cell.

In the above configuration, the electrode tabs of the battery cells are guided individually by the guide member having the slits. With such a configuration, even when the electrode tabs of two or more battery cells are directly joined without using a busbar, unintended deformation or damage to the electrode tabs is suppressed. As a result, the number of busbars in the battery module can be reduced, enabling weight reduction of the battery module.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view of a battery module according to a first embodiment; in FIG. 1, battery cells are shown without hatching, and in FIGS. 2 to 4 as well, the battery cells are shown without hatching;
FIG. 2 is a diagram illustrating a method for manufacturing the battery module according to the first embodiment;
FIG. 3 is a sectional view of a battery module according to a second embodiment;
FIG. 4 is a diagram illustrating a method for manufacturing the battery module according to the second embodiment; and
FIG. 5 is a diagram showing a tab joining member and a guide member according to the second embodiment.

### DETAILED DESCRIPTION OF EMBODIMENTS

In one embodiment of the present technology, in at least one of the battery cells, the electrode tab that has passed through the slit may be joined to the electrode tabs of three or more other battery cells. In a structure in which many electrode tabs are collectively joined together, the number of steps performed to join the electrode tabs during manufacture of the battery module can be reduced.

In one embodiment of the present technology, in each of the battery cells, the electrode tab that has passed through the slit may be welded to the electrode tab of at least one other battery cell. In this case, the electrode tabs may be collectively joined by, for example, ultrasonic welding.

Alternatively, the battery module may further include a tab joining member attached to the guide member. In this case, in each of the battery cells, the electrode tab that has passed through the slit may be held, together with the electrode tab of at least one other battery cell, between the guide member and the tab joining member. With such a configuration, during manufacture of the battery module, two or more electrode tabs can be easily joined by inserting the electrode tabs of the battery cells into the respective slits of the guide member and then attaching the tab joining member to the guide member.

In the above embodiment, the tab joining member may be attached to the guide member so as to be slidable relative to the guide member. With such a configuration, during manufacture of the battery module, two or more electrode tabs can be easily joined by sliding the tab joining member relative to the guide member while the electrode tabs of the battery cells remain inserted in the respective slits of the guide member.

### First Embodiment

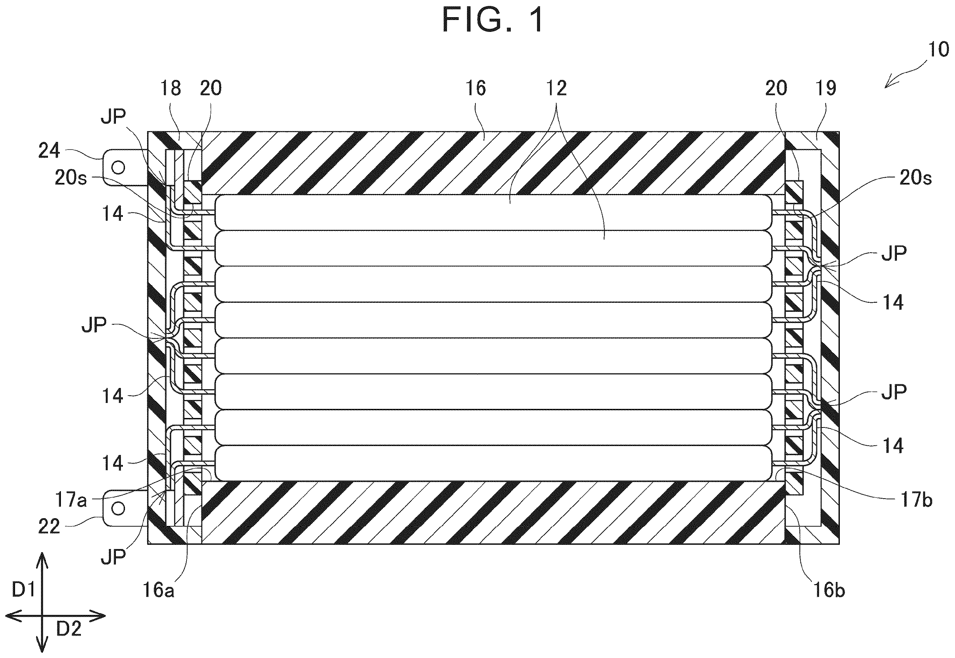

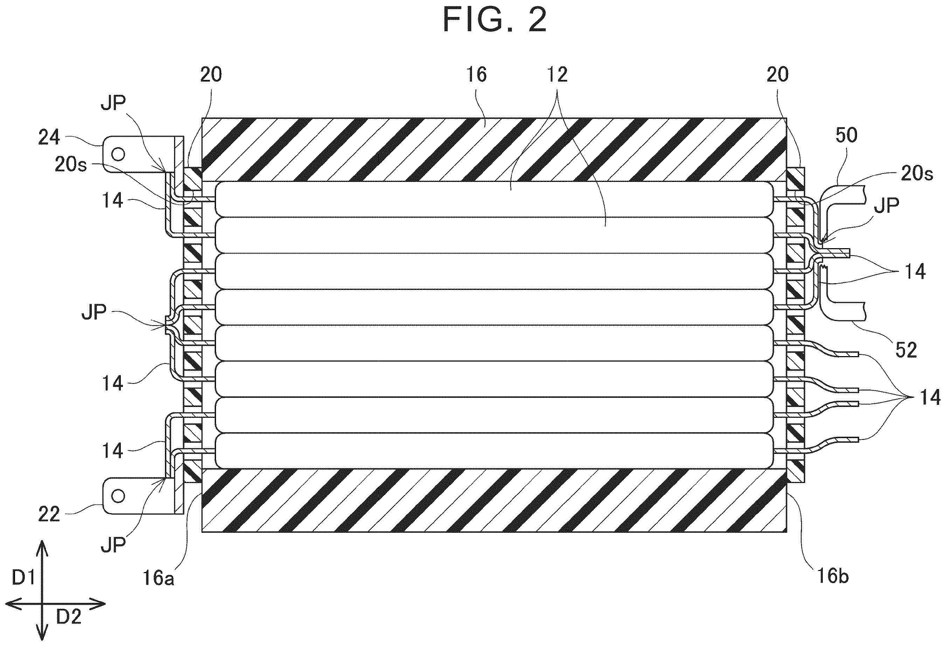

A battery module 10 according to a first embodiment will be described with reference to FIGS. 1 and 2. The battery module 10 of the present embodiment can be mounted on, for example, a vehicle. The vehicle is, for example, a battery electric vehicle (BEV). However, the vehicle is not limited to a BEV, and may be another type of electrified vehicle such as a hybrid electric vehicle (HEV) or a plug-in hybrid electric vehicle (PHEV). The battery module 10 can supply electric power to a motor that drives the wheels of the vehicle.

As shown in FIG. 1, the battery module 10 includes a plurality of battery cells 12, a casing 16, a pair of covers 18, 19, a pair of guide members 20, and a pair of electrode terminals 22, 24.

Each battery cell 12 is a rechargeable secondary battery cell. The secondary battery cell is, for example, a lithium-ion battery cell. Each battery cell 12 has a flat shape. Each battery cell 12 is, for example, a pouch battery cell (also referred to as a laminate battery cell). Each battery cell 12 has an elongated shape. The battery cells 12 are stacked in the thickness direction of the battery cells 12.

In the drawings, the thickness direction of the battery cells 12 (also referred to as the stacking direction) is indicated as direction D1, and the longitudinal direction of the battery cells 12 that is perpendicular to the thickness direction is indicated as direction D2. Accordingly, the thickness direction (stacking direction) is an example of the "first direction" in the present technology, and the longitudinal direction is an example of the "second direction" in the present technology.

The battery cells 12 are housed inside the casing 16. The casing 16 has a first end 16a and a second end 16b. The casing 16 extends in a tubular shape along the longitudinal direction D2 of the battery cells 12 from the first end 16a to the second end 16b. The casing 16 thus surrounds the battery cells 12. The end 16a of the casing 16 has an opening 17a, and the end 16b of the casing 16 has an opening 17b. The cover 18 is placed at the first end 16a of the casing 16 to close the opening 17a.

The electrode terminals 22, 24 are provided on the cover 18 at the first end 16a of the casing 16. Each of the electrode terminals 22, 24 is a bent plate member. Each of the electrode terminals 22, 24 is formed of a conductive material such as metal. Each of the electrode terminals 22, 24 protrudes outward from the cover 18. Each of the electrode terminals 22, 24 extends from the inside of the cover 18 (i.e., from the electrode tab side) toward the outside of the cover 19. Each of the electrode terminals 22, 24 passes through the cover 18. The electrode terminals 22, 24 serve as the cathode terminal 22 and the anode terminal 24 of the battery module 10. Each of the electrode terminals 22 , 24 is electrically connected to the battery cells 12. The cover 19 is placed at the second end 16b of the casing 16 to close the opening 17b. The casing 16 and the covers 18, 19 are formed of an insulating material such as resin.

Each battery cell 12 has a pair of electrode tabs 14. The electrode tabs 14 are located at both ends of the battery cell 12 in the longitudinal direction D2. The electrode tabs 14 each extend in the longitudinal direction D2. Each electrode tab 14 is a member in the form of a sheet and is formed of a conductive material such as metal. Each electrode tab 14 outputs electricity from inside the corresponding battery cell 12 to the outside. The electrode tabs 14 of the battery cells 12 protrude outward in the longitudinal direction from the casing 16 through the opening 17a or the opening 17b. The electrode tabs 14 are covered by the covers 18, 19 provided at both ends 16a, 16b of the casing 16. The electrode tabs 14 protruding from the openings 17a, 17b of the casing 16 are thus protected.

As one example, the battery cells 12 includes four pairs of battery cells 12. The battery cells 12 of each pair are arranged adjacent to each other and are connected in parallel via electrode tabs 14. The four pairs of battery cells 12 are connected in series via the electrode tabs 14. Among the four pairs of battery cells 12, the pair of battery cells 12 located at one end in the stacking direction (the thickness direction D1 of the battery cells 12) is connected to one of the electrode terminals 22, 24. Among the four pairs of battery cells 12, the pair of battery cells 12 located at the other end in the stacking direction (D1) is connected to the other of the electrode terminals 22, 24.

Each guide member 20 is a member in the form of a plate and is formed of an insulating material such as resin. The guide members 20 are respectively located on both sides of the battery cells 12 in the longitudinal direction D2. Each guide member 20 has a plurality of slits 20s. Each slit 20s has a rectangular opening. Each slit 20s extends through the corresponding guide member 20 in the longitudinal direction D2 of the battery cells 12. The dimension of each slit 20s in the thickness direction D1 of the battery cells 12 is larger than the dimension of each electrode tab 14 in the thickness direction D1 of the battery module 10. Each slit 20s allows the corresponding electrode tab 14 to pass therethrough. That is, each electrode tab 14 extends through the corresponding guide member 20 in the longitudinal direction D2.

In each of the battery cells 12, the electrode tab 14 that has passed through the slit 20s is joined to the electrode tab 14 of at least one other battery cell 12. More specifically, in some of the battery cells 12, the electrode tab 14 that has passed through the slit 20s is joined to the electrode tabs 14 of three other battery cells 12. In other battery cells 12, the electrode tab 14 that has passed through the slit 20s is joined to the electrode tab 14 of one other battery cell 12. The electrode tabs 14 are collectively joined by, for example, ultrasonic welding. The number of electrode tabs 14 joined together is not limited to two or four, and may be three, five, or more.

In other words, the battery module 10 includes one or more joint portions JP where at least two electrode tabs 14 are joined together. The joining of the electrode tabs 14 is not limited to ultrasonic welding. For example, the electrode tabs 14 may be joined by laser welding. Alternatively, the electrode tabs 14 may be joined via another member such as an adhesive, a welding material, or a connecting member (e.g., a wire).

In the battery module 10 of the present embodiment, the electrode tabs 14 of the battery cells 12 are each guided individually by the corresponding guide member 20 having the slits 20s. With such a configuration, even when the electrode tabs 14 of two or more battery cells 12 are directly joined without using a busbar, unintended deformation or damage to the electrode tabs 14 is suppressed. As a result, the number of busbars in the battery module 10 can be reduced, enabling weight reduction of the battery module 10.

In the present embodiment, in some of the battery cells 12, the electrode tab 14 of the battery cell 12 that has passed through the slit 20s is joined to the electrode tabs 14 of three other battery cells 12. When many electrode tabs 14 are collectively joined together, the number of steps performed to join the electrode tabs 14 during manufacture of the battery module can be reduced.

An example of the method for manufacturing the battery module 10 will now be described with reference to FIG. 2. First, as shown in FIG. 2, the battery cells 12 housed inside the casing 16 and the pair of guide members 20 are prepared. Next, the guide members 20 are respectively placed at the ends 16a, 16b of the casing 16. At this time, the guide members 20 are positioned such that the electrode tabs 14 of the battery cells 12 are respectively inserted into the slits 20s of the guide members 20. Next, the electrode tab 14 that has passed through the slit 20s and at least one other electrode tab 14 are brought together and collectively joined by ultrasonic welding. In this process, the two or more electrode tabs 14 brought together are held between a horn 50 for ultrasonic welding and an anvil 52, and are welded using ultrasonic vibration energy from the horn 50. After the joining, any surplus portions of the electrode tabs 14 may be cut off. Thereafter, among the multiple pairs of electrode tabs 14 at the first end 16a of the casing 16, the joint portions JP of the two pairs of electrode tabs 14 located at both ends in the stacking direction are connected to the electrode terminals 22, 24, respectively. Finally, as shown in FIG. 1, the covers 18, 19 are attached to the ends 16a, 16b of the casing 16, respectively.

The battery module 10 is manufactured in this manner. With this manufacturing method, even when the electrode tabs 14 of two or more battery cells 12 are directly joined together without using a busbar, unintended deformation or damage to the electrode tabs 14 is suppressed. As a result, the number of busbars in the battery module 10 can be reduced, enabling weight reduction of the battery module 10.

In the battery module 10, the joint portions JP of the pairs of battery cells 12 may be connected to a battery management system (BMS) of a vehicle (not shown), although the present disclosure is not limited to this. In this case, the BMS can detect the potential of each pair of battery cells 12.

### Second Embodiment

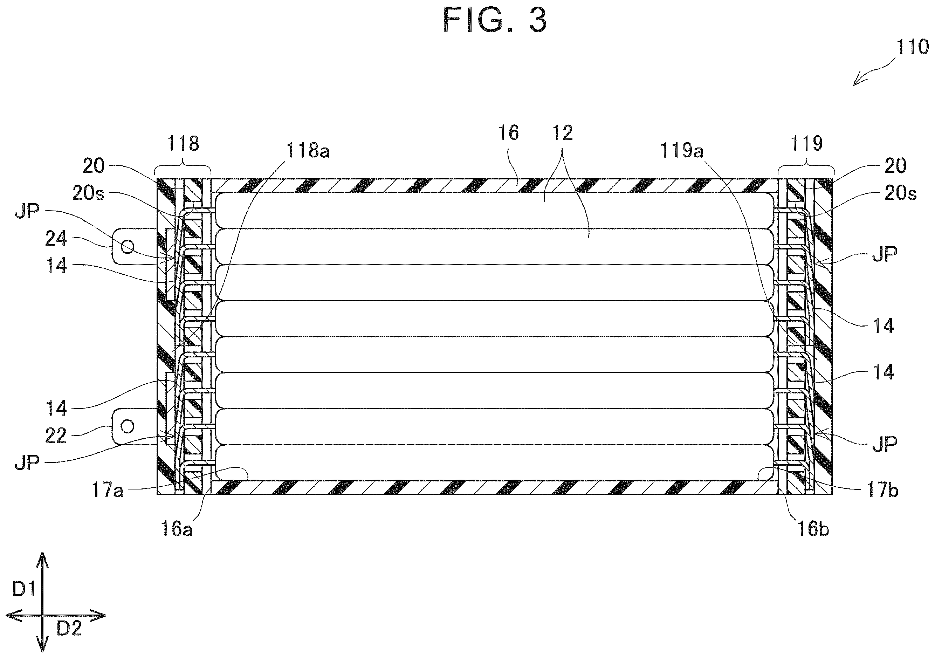

A battery module 110 according to a second embodiment will be described with reference to FIGS. 3 to 5. As shown in FIGS. 3 to 5, the battery module 110 includes a pair of tab joining members 118, 119 instead of the covers 18, 19. The tab joining members 118, 119 are respectively attached to the guide members 20 of the battery module 110. In this respect, the battery module 110 of the present embodiment differs from the battery module 10 of the first embodiment. The configuration of the battery module 110 may otherwise be the same as that of the battery module 10 of the first embodiment.

The tab joining members 118, 119 are members for joining the battery cells 12. Each of the tab joining members 118, 119 is formed of an insulating material such as resin. Each of the tab joining members 118, 119 has a rectangular parallelepiped shape. As one example, the tab joining member 118 has a fitting groove 118a into which the corresponding guide member 20 can be fitted, and the tab joining member 119 has a fitting groove 119a into which the corresponding guide member 20 can be fitted. The tab joining members 118 is fixed to the corresponding guide member 20 by fitting this guide member 20 into the fitting groove 118a. The tab joining members 119 is fixed to the corresponding guide member 20 by fitting this guide member 20 into the fitting groove 119a. The fitting grooves 118a, 119a extend along the thickness direction D1 of the battery cells 12. Each of the tab joining members 118, 119 is attached to the corresponding guide member 20 so as to be slidable along the thickness direction D1 of the battery cells 12.

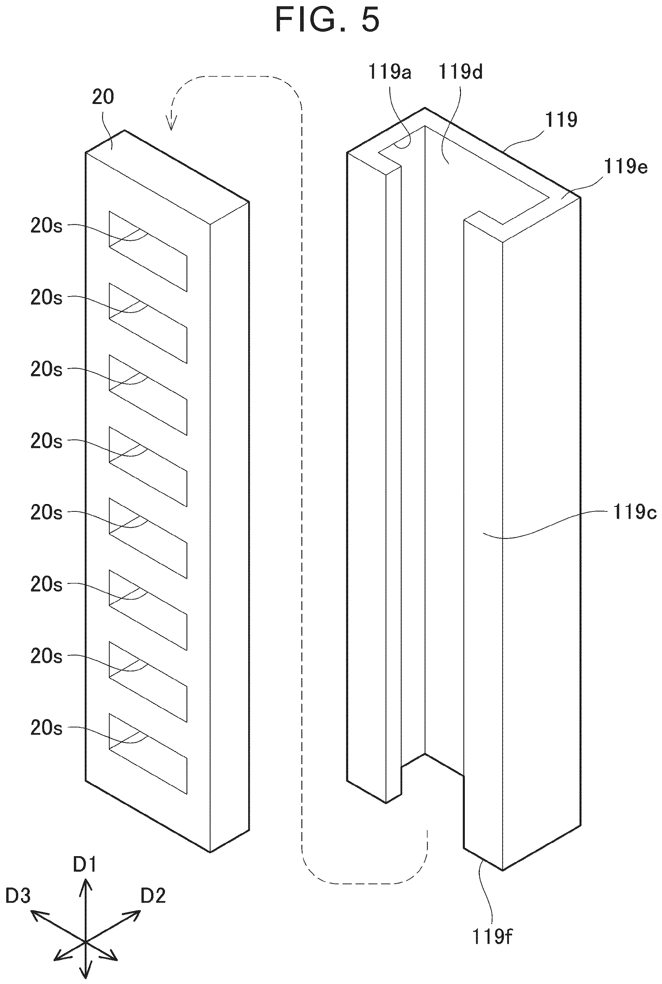

The fitting groove 119a of the tab joining member 119 will be described in detail with reference mainly to FIG. 5. As shown in FIG. 5, the fitting groove 119a extends from one end 119e of the tab joining member 119 in the thickness direction D1 of the battery cells 12 to the other end 119f of the tab joining member 119 in the thickness direction D1 of the battery cells 12. The fitting groove 119a has a constant cross-sectional area. The cross-sectional area herein refers to the area of a cross section of the fitting groove taken along a plane perpendicular to the thickness direction D1 of the battery cells 12. The fitting groove 119a opens toward the battery cells 12 at an end face 119c of the tab joining member 119. The width of the fitting groove 119a at the end face 119c is smaller than the width of the fitting groove 119a at its bottom face 119d. The "width" refers to the dimension of the fitting groove 119a at the bottom face 119d in a direction D3 perpendicular to both the thickness direction D1 and the longitudinal direction D2 of the battery cells 12. The fitting groove 118a of the tab joining member 118 may have the same configuration as the fitting groove 119a of the tab joining member 119.

As shown in FIG. 3, in each of the battery cells 12, the electrode tab 14 that has passed through the slit 20s of the guide member 20 is held, together with the electrode tab 14 of at least one other battery cell 12, between the guide member 20 and the corresponding tab joining member 118 or 119. With such a configuration, during manufacture of the battery module 110, two or more electrode tabs 14 can be easily joined by inserting the electrode tabs 14 of the battery cells 12 into the respective slits 20s of the guide members 20 and then attaching the tab joining members 118, 119 to the corresponding guide members 20.

The electrode terminals 22, 24 are attached to the tab joining member 118 in the same manner as to the cover 18 of the first embodiment. On the tab joining member 118 side, in each of the battery cells 12, the electrode tab 14 that has passed through the slit 20s of the guide member 20 is held, together with the electrode tab 14 of at least one other battery cell 12, between the corresponding electrode terminal 22 or 24 of the guide member 20 and the tab joining member 118. Accordingly, by attaching the tab joining member 118 to the guide member 20, two or more electrode tabs 14 can be joined together, and each group of the two or more joined electrode tabs 14 can also be easily joined to the corresponding electrode terminal 22 or 24.

The tab joining members 118, 119 in the present embodiment cover the openings 17a, 17b at both ends 16a, 16b of the casing 16, respectively. That is, each of the tab joining members 118, 119 functions as a cover for the casing 16.

In the battery module 110 of the present embodiment as well, the electrode tabs 14 of the battery cells 12 are guided by the guide member 20 having the slits 20s. With such a configuration, even when the electrode tabs 14 of two or more battery cells 12 are directly joined without using a busbar, unintended deformation or damage to the electrode tabs 14 is suppressed. As a result, the number of busbars in the battery module 110 can be reduced, enabling weight reduction of the battery module 110.

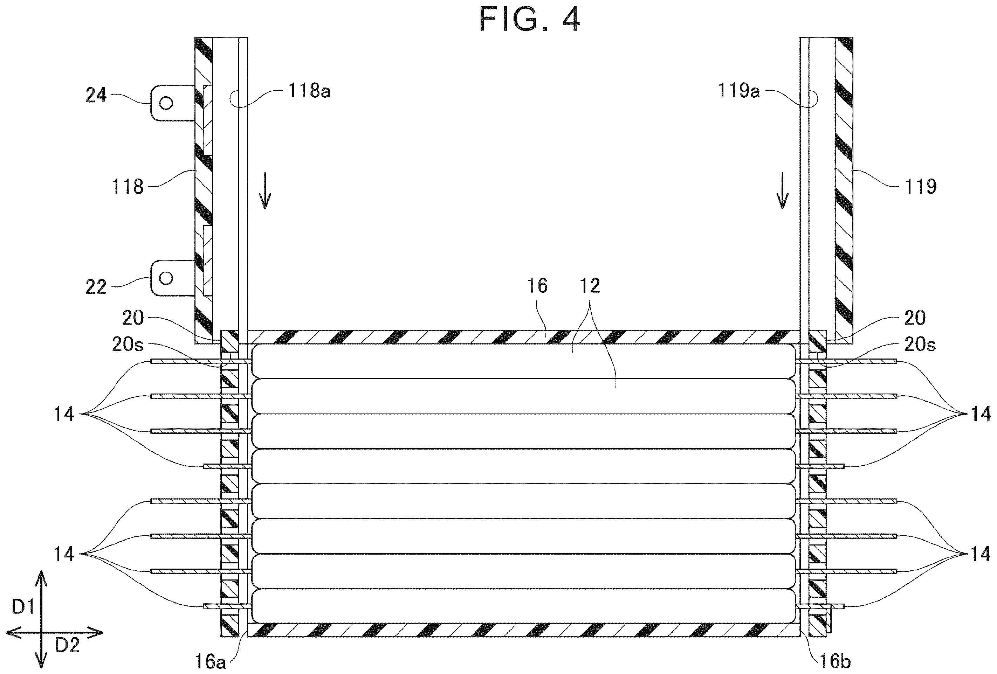

An example of the method for manufacturing the battery module 110 will now be described. First, as shown in FIG. 4, the battery cells 12 housed inside the casing 16 and the pair of guide members 20 are prepared. Next, the guide members 20 are respectively placed at the ends 16a, 16b of the casing 16. At this time, the guide members 20 are positioned such that the electrode tabs 14 of the battery cells 12 are respectively inserted into the slits 20s of the guide members 20. Thereafter, the tab joining members 118, 119 are attached to the corresponding guide members 20 by sliding the tab joining members 118, 119 relative to the guide members 20. In this step, the tab joining members 118, 119 are attached to the corresponding guide members 20 while the electrode tabs 14 of the battery cells 12 remain inserted in the slits 20s.

The tab joining member 118 slides from a starting position, where it begins to face the guide member 20 (see FIG. 4), to a mounting position where the tab joining member 118 is attached to the guide member 20 (see FIG. 3). As a result, the sliding movement of the tab joining members 118, 119 causes each of the electrode tabs 14 in each battery cell 12 to be bent so as to overlap the electrode tab 14 of an adjacent battery cell 12. When the tab joining members 118, 119 are positioned at the mounting position, the overlapping electrode tabs 14 are held between the guide member 20 and the tab joining members 118, 119. Accordingly, the electrode tabs 14 are joined. The electrode terminals 22, 24 are attached to the tab joining member 118. When the tab joining member 118 is positioned at the mounting position, each of the electrode terminals 22, 24 is in contact with the corresponding joint portion JP of the electrode tabs 14.

The battery module 110 is manufactured in this manner. In the manufacturing method described above, each of the tab joining members 118, 119 is attached to the corresponding guide member 20 so as to be slidable relative to the guide member 20. With such a configuration, during manufacture of the battery module 110, two or more electrode tabs 14 can be easily joined by sliding each of the tab joining members 118, 119 relative to the corresponding guide member 20 while the electrode tabs 14 of the battery cells 12 remain inserted in the respective slits 20s of the guide member 20.

In the present embodiment, two battery cell units, each including four battery cells 12 connected in parallel, are connected in series. Among the four battery cells 12, the length (the dimension in the longitudinal direction D2 of the battery cells 12) of the electrode tab 14 of the battery cell 12 located at one end in the thickness direction D1 of the battery cells 12 is smaller than the lengths of the electrode tabs 14 of the other three battery cells 12. With such a configuration, when the tab joining members 118, 119 are attached to the respective guide members 20, the electrode tabs 14 are less likely to protrude beyond the guide member 20.

The battery module 10 of the first embodiment may include one of the covers 18, 19. In another modification, the battery module 10 may not include the covers 18, 19.

The battery modules 10, 110 of the first and second embodiments may not include the electrode terminals 22, 24. In this case, an external electrical component electrically connected to the battery module 10, 110 may be directly connected to one or more joint portions JP provided in the battery module 10, 110.

## Claims

1. A battery module (10, 110) comprising:
a plurality of battery cells (12) stacked in a first direction (D1) and each including an electrode tab (14) extending in a second direction (D2) perpendicular to the first direction (D1); and
a guide member (20) located on one side of the battery cells (12) in the second direction (D2) and having a plurality of slits (20s) through which the electrode tabs (14) of the battery cells (12) respectively pass,
wherein, in each of the battery cells (12), the electrode tab (14) that has passed through the slit (20s) is joined to the electrode tab (14) of at least one other battery cell (12).

2. The battery module (10, 110) according to claim 1, wherein, in at least one of the battery cells (12), the electrode tab (14) that has passed through the slit (20s) is joined to the electrode tabs (14) of three or more other battery cells (12).

3. The battery module (10) according to claim 1 or 2, wherein, in each of the battery cells (12), the electrode tab (14) that has passed through the slit (20s) is welded to the electrode tab (14) of at least one other battery cell (12).

4. The battery module (110) according to claim 1 or 2, further comprising a tab joining member (118, 119) attached to the guide member (20),
wherein, in each of the battery cells (12), the electrode tab (14) that has passed through the slit (20s) is held, together with the electrode tab (14) of at least one other battery cell (12), between the guide member (20) and the tab joining member (118, 119).

5. The battery module (110) according to claim 4, wherein the tab joining member (118, 119) is attached to the guide member (20) so as to be slidable relative to the guide member (20).
